# EUROPEAN PATENT APPLICATION

(11) **EP 3 375 343 A1**
(43) Date of publication of application: **19.09.2018**
(21) Application number: 18161409.0
(22) Date of filing: 13.03.2018
(51) Int. Cl.: A47L 13/50, F16B 7/14

(54) **A CLAMP FOR CLAMPING TELESCOPIC POLE MEMBERS**

(30) Priority: 13.03.2017 GB 201703987
(71) Applicant: Ionic Systems Limited, Swindon SN5 5WN (GB)
(72) Inventor: MAWLAM, Craig, Swindon SN5 5WN (GB)
(74) Representative: HGF Limited

(57) **Abstract**

A telescopic pole member clamp, comprising a clamp body having an inner surface defining a bore to receive a telescopic pole member and first and second opposed lobes extending away from an outer surface; an actuator selectively movable between open and closed positions. When the in a closed position, the first and second lobes are urged towards one another such that the inner surface closes around a telescopic pole member within the bore to clamp the telescopic pole member in position within the clamp body. When in an open position the telescopic pole member is slidable within the clamp body. There is also provided a distending member configured to urge the first and second lobes apart when the actuator is in an open position.

## Description

This invention relates to a clamp for securing telescopic poles. In particular, but not exclusively, the invention relates to clamps for telescopic pole members of window cleaning poles.

### BACKGROUND

In tall buildings, it is often necessary to ensure the outside fagade, including a region of windows, remains clean. This ensures both a good aesthetic standard of the building and in particular the windows, but also to ensure optimal thermal and optical performance of the windows. A dirty window may lead to reduced transmission of light therethrough, potentially increasing lighting costs. Furthermore, a dirty window may also lead to increased heat absorption by the dirty particles adhered to the glass, potentially leading to an increase in costs associated with air conditioning systems in countries having warm outside temperatures during the day.

Several solutions exist for cleaning the fagade, including windows, of tall buildings, including manually lowering a cradle containing window cleaners from a roof of the building. Another solution is to lower a window cleaner in a harness, for example by abseiling, down the side of a building. For some buildings, it may be possible to use a window cleaning pole extending upwards from the ground and supplying window cleaning fluid to a brush on the upper end of the window cleaning pole. In examples, the window cleaning pole is used to clean all the windows of a building within the height range of the window cleaning pole. In other examples, the window cleaning pole is only be used to clean the windows within the height range of the window cleaning pole, even if the building is taller than the height range of the window cleaning pole. Window cleaning poles of the prior art comprise a telescopically extending window cleaning pole, and a head comprising a plurality of bristles at one end of the window cleaning pole. Window cleaning fluid is typically passed up a tube running within the telescopically extending window cleaning pole to the head.

In one example of a prior art window cleaning pole, the window cleaning pole comprises an elongate pole comprising a plurality of telescopic pole members. Each of the telescopic pole members is hollow, and has a substantially circular cross-section. The telescopic pole members are each provided with a clamp at an upper end thereof to clamp adjacent telescopic pole members in the plurality of telescopic pole members at a desired extension position and a desired rotational position. The elongate pole has a proximal end arranged to be held by an operator in use, and on the ground, and a distal end connected to a pivotable head. The head comprises a plurality of bristles extending from a base of the head and is connected to the elongate pole via a pivotable connection. The pivotable connection is configured to be pivotable about an axis transverse to a longitudinal direction of the window cleaning pole. The base of the head has defined therein an opening for discharge of window cleaning fluid from the head towards a surface to be cleaned. The opening is in fluid communication with a flexible tube running outside the pivotable connection and passing within a distal-most telescopic pole member at a distal end thereof. The flexible tube extends within the plurality of telescopic pole members to a proximal end of a proximal-most telescopic pole member and is connected to a source of window cleaning fluid. A tap may be provided in the flexible tube, outside the window cleaning pole to temporarily restrict or stop the flow of window cleaning fluid at the head.

The window cleaning pole of the prior art suffers from a number of problems. Firstly, when the clamps are worn, or if the clamps are inaccurately manufactured, adjacent telescopic pole members may not be fixedly clamped in a rotational position, even when the clamp is closed. Such a problem can result in an unstable and unsafe window cleaning pole, as well as lead to an unsatisfactory window cleaning performance if the head is not securely facing the surface to be cleaned.

A method of securing adjacent telescopic pole members is through an actuator such as a cam lever, which is selectively movable between open and closed positions and translates rotary motion into linear motion due to a cam surface on the cam lever. A clamp body with first and second lobes extending away from an outer surface of a clamp body can be used to secure a telescopic pole member by arranging the cam lever such that its cam surface bears against an outer surface of the first lobe, either directly or via an intermediate member, with the second lobe secured relative to the cam lever. By rotating the cam lever into a closed position, the cam surface urges the lobes of the clamp body towards one another, closing the inner clamping surface around the telescopic pole member thereby applying a clamping force to a telescopic pole member, securing the telescopic member in place. The clamp can be released by performing an opposite rotation to that which applied the clamping force. This causes a load applied by the cam surface to be removed, allowing the lobes to be urged apart and releasing the telescopic pole member such that it can slide within the clamp body. This can be achieved with a single hand or finger due to the mechanical advantage offered by the lever arm of the cam lever. This allows a window cleaner to quickly and easily extend or collapse multiple telescopic pole members without the need for additional tools.

Telescopic pole systems inherently require repeated extending and collapsing of telescopic pole members and, as described above, a clamp is often attached to an end of a telescopic pole so that the telescopic pole member can be secured in place. As the telescopic pole member is repeatedly extended and collapsed, the telescopic pole will pass through the clamping surface of the clamp body and over time this will lead to wear on the surfaces of the telescopic pole member. Over time repeated sliding of the pole through the clamp causes material from the outer surface of the telescopic pole to be worn away, resulting in the clamp no longer being able to secure adjacent telescopic pole members in position when in a closed configuration. This results in the risk of telescopic pole members being able to mutually rotate even when the clamp actuator is in a closed configuration.

The gradual wearing of telescopic poles is a recognised problem and one solution of the prior art is to include additional space in the clamp so the clamp can be adjusted to bring the clamping surface closer to the outer surface of the telescopic pole before any clamping force is applied by the actuator. If the clamp is engaged by a cam lever, this can be achieved by adjusting the attachment points of the actuator, where it is coupled to the respective first and second lobes, in order to bring the clamping surface of the clamp closer to the outer surface of the telescopic pole member when in an unclamped configuration. This allows the same rotation of the cam lever to exert the necessary clamping force to secure the telescopic pole members in place.

Another way to bring the clamping surface of the clamp body towards the outer surface of the telescopic pole member before the actuator is engaged is to include a spring between the outer surface of a lobe of the clamp body and the associated attachment point of the actuator. As the outer surface of the telescopic pole wears down, the spring will provide some additional load, as it remains at least partially compressed even when the clamp is open. By providing an additional load across the lobes of the clamp body, the spring is able to urge the lobes together and bring the clamping surface of the clamp body into contact with the outer surface of the telescopic pole member. This means the actuator is only required to provide the clamping force necessary to secure the telescopic pole member in place, rather than first displacing the lobes to bring the clamping surface into contact with the outer surface of the telescopic pole before applying a clamping force to secure the telescopic pole member. This is particularly important if the actuator is a cam lever, as there is only a fixed amount of displacement possible with rotation of a cam lever. Therefore, the same cam lever can be used to apply the same clamping force, because the spring will apply an additional load to urge the lobes together and bring the clamping surface into contact with the telescopic pole surface without having to engage the cam lever. This reduces the amount of adjustment required when reconfiguring the clamp to ensure sufficient force is applied to secure the telescopic pole members.

However, providing an additional load to keep the clamping surface in contact with the outer surface of a telescopic pole member does not solve the problem of wear caused by repeated extension and collapse of telescopic pole members. Over time, the clamp will experience greater loads as the clamping surface is continuously brought into contact with the outer surface of the telescopic pole member, applying progressively greater strain on the clamp. Also, the clamping surface will continue to wear the outer surface of the telescopic pole member and either the telescopic pole surface will wear to the extent the clamps will need to be tightened again, or the pole will break through significant wear of the outer surface and need to be replaced. In addition to the risk of increased pole wear through greater clamping force, the strain applied to the clamp itself is increased, as the clamp remains strained even in an open configuration and the stresses within the clamp body will be increased as the pole wears down.

The present disclosure seeks to provide a solution to the problem of mechanical wear of telescopic pole members.

### BRIEF SUMMARY OF THE DISCLOSURE

Viewed from a first aspect, the present invention provides a telescopic pole member clamp comprising a clamp body having an inner surface defining a bore to receive a telescopic pole member and first and second opposed lobes extending away from an outer surface. The clamp further comprises an actuator selectively movable between open and closed positions, wherein in the closed position, the first and second lobes are urged towards one another such that the inner surface closes around a telescopic pole member within the bore to clamp the telescopic pole member in position within the clamp body, and wherein in the open position the telescopic pole member is slidable within the clamp body. The clamp further comprises a distending member configured to urge the first and second lobes apart when the actuator is in the open position.

Thus, when the clamp is in an open configuration, the inner surface of the clamp is biased away from the outer surface of the telescopic pole, increasing the space between the clamping surface and the telescopic pole. By opening the bore of the clamp, the telescopic pole is able to slide through the clamp more easily and with reduced friction and wear. In contrast to this, prior art solutions secure telescopic pole members that have a worn outer surface by bringing the inner clamping surface into contact with the outer surface of the telescopic pole member through adjustment of the clamp or provision of a spring on the outside of the lobes, neither of which solves the problem of wearing down the outer surface of the telescopic pole member through prolonged use.

Increasing the space between the telescopic pole member and the inner surface of the clamp is particularly advantageous over prior art solutions. Firstly, the telescopic pole is not being continually worn down following repeated collapsing and extension of the telescopic pole members and continuous adjustment of the clamp to maintain contact between the clamping surface and the outer surface of the telescopic pole member. Further, by increasing the distance between the lobes in an open configuration and clamping to the same extent in a closed position, the clamp body will fatigue less, as pushing the lobes apart to release the telescopic pole results in compressive stresses across the clamp body, and pushing the lobes together to clamp the pole results in tensile stresses across the clamp body. This balanced loading cycle is preferable to the cycles of increased tensile stresses which result from the additional load provided by the spring outside the lobes, prior to the actuator securely clamping and releasing the telescopic poles.

The distending member may be a resilient member, for example, a coil spring. The resilient member may have a stiffness between 0.5 to 5.0 N/mm, preferably 1.0 to 3.5 N/mm, even more preferably 1.5 to 2.5 N/mm and most preferably approximately 1.7 N/mm.

The distending member may increase the distance between the first and second lobes by up to 10.0 mm. Typically, the distending member may increase the distance between the first and second lobes from touching (or almost touching: 0.1 mm) to up to 10 mm. Thus, the distending member may typically increase the distance between the first and second lobes from about 0.1 to 6.0 mm. This would ensure the gap between the inner surface of the clamp and the outer surface of the telescopic pole member would remain sufficiently large when the clamp is in an open configuration that the telescopic pole members are able to slide freely through the bore of the clamp, for telescopic pole members of typical diameters for window cleaning poles in the range of approximately 25 to 45 mm.

The clamp body may comprise a resilient material, for example a resilient plastic, elastic or rubberised material. This would allow the clamp body itself to flex and aid the biasing of the clamping surface away from the outer surface of the telescopic pole member.

The clamp body may be hinged away from the lobes. This would allow for a larger gap to be formed between the clamping surface and telescopic pole member, as there would be no need to overcome any resistance or stiffness in the clamp body when urging the lobes away from one another.

The clamp may comprise first and second recesses defined in opposing faces of the respective first and second lobes, wherein opposing ends of the distending member are located within the respective recesses. The recess could, for example, be a simple groove or slot in the surface of the lobe which can securely receive and locate the distending member.

The distending member could be secured to the inner surface of the first and / or second lobe. This could be through use of an adhesive or other chemical bond, or through a mechanical or magnetic fixation to the inner surface of the first or second lobe.

The clamp may comprise an opening in one or both of opposing faces of the respective first and second lobes, wherein at least part of the actuator passes through at least one of said openings.

The actuator may comprise a connecting member with a first end, and an end member located at the first end, wherein the connecting member is secured to the respective lobe by the end member. The connecting member may be a pin, a bolt, a screw or any other mechanical fixation device. The end member may be a nut, or any other suitable mechanical fastening or fixing.

The actuator may comprise a connecting member with a second end, a cam lever and a cross pin, wherein the connecting member passes through the openings in the first and second lobes, wherein the cam lever is connected to the connecting member at the second end, and wherein the cam lever is secured by the cross pin to be rotatable about an axis transverse to the connecting member. The cam lever may comprise a cam surface that bears directly on an outer face of the lobe.

The connecting member may pass through the distending member. This would allow the distending member to surround the connecting member and provide a particularly compact solution, as a separate connecting member and distending member takes up more space than if the connecting member and distending member passed through one another, such as a bolt passing through a coil spring.

### BRIEF DESCRIPTION OF THE DRAWINGS

Embodiments of the invention are further described hereinafter, purely by way of example, with reference to the accompanying drawings, in which:
Figure 1 is a cross-sectional illustration of a telescopic pole member clamp in an open configuration;
Figure 2 is corresponds to Figure 1, but showing the telescopic pole member clamp in a closed configuration; and
Figure 3 is a perspective view of a telescopic pole member clamp in a closed configuration.

### DETAILED DESCRIPTION

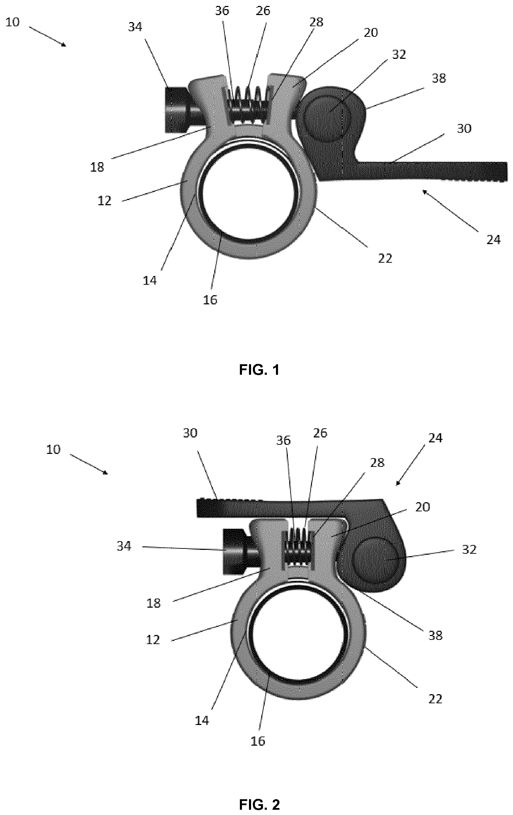

Figure 1 is an illustration of a telescopic pole member clamp according to the present disclosure. Telescopic pole member clamp 10 is used to secure telescopic poles such as those found in window cleaning systems, and comprises a clamp body 12 having an inner surface 14 defining a bore to receive a telescopic pole member 16 and first 18 and second 20 opposed lobes extending away from an outer surface 22. The clamp further comprises an actuator 24 selectively movable between open and closed positions. In the closed position, the first 18 and second 20 lobes are urged towards one another such that the inner surface 14 closes around the telescopic pole member 16 within the bore to clamp the telescopic pole member 16 in position within the clamp body 12. When the clamp 10 is in an open position, a distending member 26 urges the lobes apart resulting in the inner periphery of the clamping surface 14 being made greater than the outer perimeter of the telescopic pole member 16. In an open position, the telescopic pole member 16 is released from the inner surface 14 of the clamp body 12 and the telescopic pole member 16 is slidable within the clamp body 12.

In the example shown in Figure 1, the distending member 26 is a compression coil spring located between the first 18 and second 20 lobes. In this illustration, the actuator 24 comprises a cam lever 30 in an open position, which allows the coil spring to urge the lobes apart. However, the distending member 26 may take the form of another type of resilient member, such as different type of spring or an elastomeric member. The resilient member may have a stiffness in the range of 0.5 to 5.0 N/mm, preferably 1.0 to 3.5 N/mm, even more preferably 1.5 to 2.5 N/mm and most preferably approximately 1.7 N/mm. The spring needs to be sufficiently stiff to ensure the lobes are biased apart enough to create a sufficient gap between the inner surface 14 of the clamp body 12 and the telescopic pole member 16 to allow the telescopic pole member 16 to slide freely within the bore of the clamp body 12. To ensure the gap between the inner surface 14 of the clamp body 12 and the telescopic pole member 16 is sufficient, the distance between the first 18 and second 20 lobes of the clamp 10 may be increased from touching (0 mm) or almost touching (0.1 mm) to up to a separation in the range of 6.0 to 10.0 mm. Thus, the distending member may typically increase the distance between the first and second lobes by between about 6.0 and 10 mm. This separation distance may be determined by the cross-sectional dimensions of the telescopic pole member 16 and the distance may be a proportion of one of these dimensions. The above exemplary separation distances are suitable for telescopic poles having diameters in the range of about 25 to 45 mm (or the equivalent dimensions for non-round cross-sections).

In this example, the clamp body 12 defines an inner surface 14 which accommodates a substantially circular telescopic pole member 16. However, the inner surface 14 of the clamp body 12 may be shaped to accommodate telescopic pole members 16 with non-circular cross-sections. Non-circular poles may have, for example, a triangular, square, substantially teardrop-shaped or elliptical cross-sectional profile.

In this example, both ends of the coil spring 26 are located in corresponding recesses on opposed faces of the lobes. These recesses provide a simple way of positioning the coil spring 26 between the first 18 and second 20 lobes. However, only one end of the coil spring 26 may be located within a recess 28 on the second lobe 20.

As shown in Figure 1, the respective lobes of the clamp 10 comprise openings in their opposing faces to allow a portion of the actuator 24 to pass through. However, one of the recesses 28 or openings may be omitted, as instead of being secured by recesses 28 or holes within the inner surface of the lobes, the distending member 26 may be secured to the inner surface of the respective lobes directly. The distending member 26 may be secured to the respective lobes by, for example, an adhesive or other chemical bond, or welding process.

In this example, the actuator 24 comprises a connecting member 36 with a first end and an end member 34 located at the first end. The connecting member 36 is secured to the respective lobe by the end member 34. This allows the actuator to be secured at the first lobe 18, for example, and apply a load to the second lobe 20 to push the lobes together in the closed configuration. As illustrated, the connecting member 36 passes through the first lobe 18 and is secured by the end member in the form of a nut 34 against the outer surface of the first lobe 18. The actuator 24 can then pull the lobes together into a closed configuration. The end member 34 may be adjustable by tools, for example a screwdriver or Allan key. Alternatively or additionally, the end member 34 may include features, such as ridges or knurls on the surface of the end member 34 to facilitate manual (tool-free) adjustment. However, the end member 34 may take the form of any other mechanical fixation device configured to connect to the first end of the connecting member 36 and secure the connecting member 36 to a lobe. For example, the end member 34 may be a threaded hole within a lobe to receive a threaded portion of the connecting member 36.

The connecting member 36 has a second end opposite to the first end. The actuator 24 further comprises a cam lever 30 rotatably coupled to the connecting member 36 via a cross dowel 32 at the second end. The connecting member 36 passes through the respective openings in the first 18 and second 20 lobes. The cam lever 30 includes a cam surface 38 which bears against the outer surface of the second lobe 20. Rotation of the cam lever 30 towards the closed position causes the cam surface 38 to urge the respective lobes towards one another, closing the inner surface 14 around the telescopic pole member 16, thereby securely clamping the telescopic pole member 16. Incorporating a cam lever 30 provides a clamp 10 which can be released by the simple action of a single hand or finger due to the mechanical advantage offered by a cam lever 30. The connecting member 36 may be connected to the cross dowel 32 at its second end by screwing into the cross dowel 32.

Advantageously, the first 18 and second 20 lobes may be symmetrical - particularly the outer bearing surfaces thereof - so that the actuator may be assembled for either left- or right-handed operation; the connecting member 36, cross dowel 32 and cam lever 30 arrangement can be flipped so that the cam surface 38 bears against the first lobe 18 and the end member 34 secured the connecting member 36 at the second lobe 20.

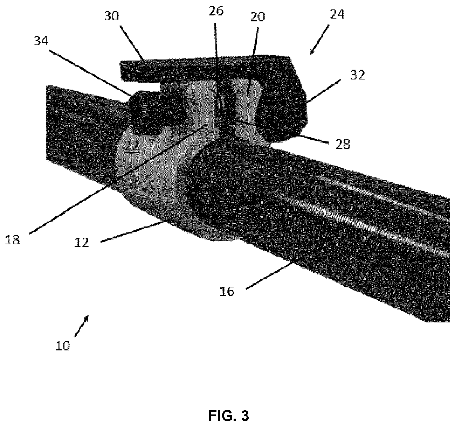

Figures 2 and 3 show the clamp 10 in a closed position. Similar elements from Figure 1 have been numbered accordingly. Figure 2 illustrates the distending member 26 as a coil spring located between the first 18 and second 20 lobes, and a cam lever 30 arranged next to a lobe of the clamp body 12 such that a cam surface 38 of the cam lever 30 bears directly on an outer face of the second lobe 20. Rotating the cam lever 30 into a closed configuration causes the cam surface 38 to urge the lobes together due to the end member 34 and cam surface 38 applying a load to the respective lobes. As the lobes are urged together, this generates a clamping force to secure the telescopic pole member 16 within the inner surface 14 of the clamp body 12 and compresses the coil spring 26.

As illustrated, the connecting member 36 passes through an internal core of the coil spring 26. This provides a more compact solution, as the space taken up by the connecting member 36 passing through the coil spring 26 is considerably less than the space occupied by the connecting member 36 and coil spring 26 if arranged separately. However, it is not necessary for the connecting member 36 to pass through the distending member 26.

As illustrated, the clamp body 12 is formed as a single piece. However, the clamp body 12 may be formed of two parts connected by a hinge. The advantage of a hinged clamp body 12 over a single piece construction is that the telescopic pole member 16 can be completely released when the clamp 10 is in an open configuration.

Although in the preceding description, the distending member 26 has been described as taking the form of a coil spring, it will be appreciated that the distending member 26 could take other forms, so long as the effect is to urge the lobes apart. Examples include a resilient member which may be made from an elastic or rubberised material. The resilient member may be a piece of material placed between the first 18 and second 20 lobes which would provide the necessary force to bias the lobes apart when the actuator 24 is in an open configuration.

The clamp body 12 may be made from materials known in the relevant art. The clamp body 12 may comprise a resilient material that allows the clamp body 12 to deform to aid the formation of a sufficient gap between the inner surface 14 and the telescopic pole member 16 and to revert to an undeformed state to close the gap again once the actuator is moved towards the closed configuration. The benefit of incorporating such a material would be a more flexible clamp body 12 which would require less force to move the first 18 and second 20 lobes apart from one another.

Instead of being located between the opposed faces, as illustrated, the distending member 26 may be located above the first 18 and second 20 lobes, while attaching to the inner surface or recesses of the respective lobes. The distending member 26 may be located away from the first 18 and second 20 lobes, for example on the outer surface 22 of the clamp body 12, and be connected to the first 18 and second 20 lobes on their inner or outer surface. In such a scenario, the distending member 26 would pull the respective lobes apart, rather than push the lobes apart as is shown in Figure 1.

In summary, there is provided a telescopic pole member clamp, comprising a clamp body having an inner surface defining a bore to receive a telescopic pole member and first and second opposed lobes extending away from an outer surface; an actuator selectively movable between open and closed positions, wherein in the closed position, the first and second lobes are urged towards one another such that the inner surface closes around the telescopic pole member within the bore to clamp the telescopic pole member in position within the clamp body, and wherein in the open position the telescopic pole member is slidable within the clamp body; and a distending member configured to urge the first and second lobes apart when the actuator is in the open position.

It is concluded that the present invention provides a clamp that separates the inner surface of a clamp body away from the outer surface of a telescopic pole member passing through the clamp body when the clamp is in an open configuration. This is achieved by biasing the lobes of a clamp apart when the clamp is in an open configuration. This increases the space between the clamping surface and the telescopic pole, allowing the telescopic pole to slide through the clamp body more easily and with reduced friction and wear. This eliminates the problem of wear on the outer surface of telescopic poles through repeated sliding through a clamp which results in poor clamping of the telescopic poles over time.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A telescopic pole member clamp, comprising:
a clamp body having an inner surface defining a bore to receive a telescopic pole member and first and second opposed lobes extending away from an outer surface;
an actuator selectively movable between open and closed positions, wherein in the closed position, the first and second lobes are urged towards one another such that the inner surface closes around the telescopic pole member within the bore to clamp the telescopic pole member in position within the clamp body, and wherein in the open position the telescopic pole member is slidable within the clamp body; and
a distending member configured to urge the first and second lobes apart when the actuator is in the open position.

2. A clamp according to claim 1, wherein the distending member is a resilient member.

3. A clamp according to claim 2, wherein the resilient member is a coil spring.

4. A clamp according to claims 2 or 3, wherein the resilient member has a stiffness in the range of 0.5 to 5.0 N/mm, preferably 1.0 to 3.5 N/mm, even more preferably 1.5 to 2.5 N/mm and most preferably approximately 1.7 N/mm.

5. A clamp according to any preceding claim, wherein the distending member increases the distance between the first and second lobes by between about 6.0 to 10.0 mm.

6. A clamp according to any preceding claim, wherein the clamp body comprises a resilient material.

7. A clamp according to any preceding claim, wherein the clamp body is hinged away from the lobes.

8. A clamp according to any preceding claim, comprising first and second recesses defined in opposing faces of the respective first and second lobes, wherein opposing ends of the distending member are located within the respective recesses.

9. A clamp according to any preceding claim, wherein the distending member is secured to an inner surface of the first and / or second lobe.

10. A clamp according to any preceding claim, comprising an opening in one or both of opposing faces of the respective first and second lobes, wherein at least part of the actuator passes through at least one of said openings.

11. A clamp according to claim 10, comprising an actuator having a connecting member with a first end, and an end member located at the first end, wherein the connecting member is secured to the respective lobe by the end member.

12. A clamp according to claim 11, comprising an actuator having a second end, a cam lever and a cross pin, wherein the connecting member passes through the openings in the first and second lobes, wherein the cam lever is connected to the connecting member at the second end, and wherein the cam lever is secured by the cross pin.

13. A clamp according to claim 12, wherein the cam lever comprises a cam surface that bears directly on an outer face of the associated lobe.

14. A clamp according to any of claims 11 to 13, wherein the connecting member passes through the distending member.
